(19) Europäisches Patentamt
European Patent Office
Office européen des brevets

(11) Publication number: **0 542 236 A1**

(12) # EUROPEAN PATENT APPLICATION

(21) Application number: **92119298.5**

(51) Int. Cl.[5]: **C08B 31/12**

(22) Date of filing: **11.11.92**

(30) Priority: **12.11.91 US 790800**
**23.09.92 US 950115**

(43) Date of publication of application:
**19.05.93 Bulletin 93/20**

(84) Designated Contracting States:
**DE GB**

(71) Applicant: **National Starch and Chemical Investment Holding Corporation**
**501 Silverside Road**
**Wilmington, Delaware 19809(US)**

(72) Inventor: **Buffa, Vito**
**99 Wycombe Place**
**Somerset, New Jersey 08873(US)**
Inventor: **Johnson, Scott**
**993 Golden Pond Court**
**Greenwood, Indiana 46143(US)**

(74) Representative: **Hagemann, Heinrich, Dr. et al**
**Patentanwälte Hagemann & Kehl Postfach 860329**
**W-8000 München 86 (DE)**

(54) **Process for manufacture of cationic starch derivatives using concentrated alkali.**

(57) This invention is directed to an improvement in the manufacture of dry non-gelatinized cationic quaternary amine starch derivatives. An alkaline solution having a concentration up to 50% is reacted in-line with a quaternary amine/epihalohydrin condensate to form the epoxide reaction product immediately before addition to a starch slurry. After formation the epoxide is introduced into a starch slurry for the formation of the starch derivative. The reaction of the quaternary amine/epihalohydrin condensate with alkali out of presence of the starch slurry permits the use of the higher concentration of alkaline solution over known methods, allowing more kettle volume for starch and greater efficiency of production.

EP 0 542 236 A1

This invention relates to an improved process for the manufacture of dry, non-gelatinized quaternary amino cationic starch derivatives. The improvement consists of pre-mixing a quaternary amine-epihalohydrin condensate with an alkali solution having a concentration up to 50% to form the epoxide of the epihalohydrin in-line immediately prior to addition to a starch slurry.

It is known that ungelatinized cationic quaternary amine starch derivatives can be made by the reaction of a quaternary ammonium etherifying reagent with an ungelatinized starch in the presence of dilute sodium hydroxide as a catalyst. Concentrated solutions of alkali are avoided to prevent gelatinization of the starch. Methods for making these cationic starch derivatives are disclosed in US-A-2,876,217; US-A-2,813,093; and US-A-3,346,563.

A modification of the US-A-2,813,093 process is one in current use in the industry. The modified process involves the initial addition of dilute (2-6%) sodium hydroxide (caustic) to a starch slurry to raise the pH of the slurry to 11-12. A previously prepared etherifying agent, the condensation product of the reaction between a quaternary amine and an epihalohydrin, is then added to the starch slurry simultaneously with additional dilute caustic. The quaternary amine/epihalohydrin condensate reacts with the caustic in the slurry in an equimolar ratio to form the epoxide of the epihalohydrin <u>in situ</u>. The additional dilute caustic serves to maintain the pH of the slurry between 11 and 12 and to catalyze the reaction of the epoxide with the starch molecules to form the quaternary amine cationic starch derivative. This procedure, however, introduces excess water into the reaction medium that inefficiently takes up kettle volume and that competes with the starch hydroxyl groups for the functional epoxy group of the etherifying agent to form the glycol.

More concentrated alkali solutions have been used, and thus the water component of the reaction medium is reduced, but these concentrated alkali solutions have been used for the preparation of gelatinized starches. US-A-3,737,370 discloses the preparation of gelatinized liquid cationic starch derivatives by the reaction of an epichlorohydrin-ammonium hydroxide condensate with starch using a concentrated ammonium hydroxide solution. US-A-3,854,970 discloses the reaction of starch with an epichlorohydrin-dimethylamine condensate using alkali at concentrations sufficient to gelatinize the starch in order to form a liquid cationic starch product.

The literature does disclose methods for making dry cationic starch derivatives, but these methods react dry starch with an etherifying reagent. For example, US-A-4,127,563 discloses the reaction of dry starch with an etherifying agent that is sprayed onto the starch; and US-A-3,243,426 discloses the reaction of starch and an etherifying reagent in an inert hydrocarbon medium. US-A-4,281,109 also discloses the preparation of cationic starch derivatives in a dry reaction. An epoxide etherifying reagent is combined with an alkali catalyst and immediately sprayed onto starch having a moisture content less than 30% or onto a starch filter cake having a moisture content of 46% or less. In the preferred embodiment, the epoxide is formed in-line by mixing a solution of alkali and the epihalohydrin form of an etherifying reagent from two separate feed lines in a continuous process just prior to spraying onto starch.

More recently, other procedures have been disclosed for modifying or varying the manufacture of cationic starch derivatives. US-A-4,332,935 discloses a process for the manufacture of cationic starch derivatives that comprises reacting the starch at a temperature of about 50° to 120°C with an alkylidene epoxide that has a tertiary amino group or quaternary ammonium group in a medium containing about 10-35% water and about 0.2-2.0 weight percent calcium hydroxide or calcium oxide. US-A-4,862,619 discloses that concentrated aqueous alkaline solutions can be admixed with aqueous granular starch slurries without pasting or swelling the granular starch material to an unacceptable degree by introducing a metered stream of the alkaline solution into a flowing stream of the starch slurry at or near the inlet of an intensive, in-line mixer. The mixer is stated to homogeneously and completely mix the alkaline and starch streams within one second or less.

Despite these known processes, cationic starch derivatives are of such importance in paper making and other manufactures, that there is still a need for a method to improve the efficiency of the known processes.

This invention is a process for making dry, non-gelatinized quaternary amine cationic starches that provides increased reaction kettle capacity and consequently more efficient production. The process utilizes concentrated alkaline solutions in reaction with quaternary amine/epihalohydrin condensates to form the epoxide of the condensate in an in-line mixer, which then introduces the epoxide immediately after formation to the starch slurry. The pH of the starch slurry is maintained between 11 and 12 and the temperature maintained below the temperature at which gelatinization would occur, typically at about 43-46°C (110°-115°F).

**Detailed Description of the Invention**

A typical method of preparing quaternary amine cationic starch derivatives is by the reaction of the epoxide form of a quaternary amine/epihalohydrin condensate with a starch molecule. To form the condensate, an epihalohydrin is reacted with a quaternary amine. In a modified process of the method disclosed in US – A – 2,813,093, the condensate is then added to a starch slurry that was initially dosed with dilute alkali to a sufficient concentration to bring the pH to about 11 to 12. The condensate reacts with the alkali in the starch slurry in an equimolar ratio to form the epoxide in situ, which, as formed, reacts with the starch molecule.

This inventive process involves the use of concentrated alkali reacted with a quaternary amine/epihalohydrin condensate to form the epoxide immediately before addition to the starch slurry. The condensate and alkali are mixed from separate feed lines into an in – line mixer leading directly to the starch slurry. In the mixer, the alkali is consumed to form the epoxide and consequently and simultaneously is diluted before it reaches the starch slurry, thus preventing the gelatinization of the starch that normally would occur by the addition of strong alkali. The slurry is maintained at a temperature sufficient for reaction to occur, but not to cause gelatinization, approximately 35° – 46° C (95° – 115° F), preferably 43° – 46° C (110° – 115° F). Addition times and temperatures can be varied to suit the requirements of individual production needs, but in general, production time is decreased because the time previously needed for the addition of dilute alkali is eliminated, and production efficiency is increased because kettle capacity for the starch is increased by the reduction in water content previously needed to dilute the alkali. The exact ratio of reagents to starch slurry is a function of the degree of substitution desired and the properties of the specific starches and reagents utilized. The determination of the amounts and types of reagents and reaction conditions is within the capabilities of one skilled in the art.

The quaternary amine/epihalohydrin condensates suitable for use by the process of this invention are the reaction products of an epihalohydrin, preferably epichlorohydrin, with quaternary amines. These condensates can be synthesized by any of the methods known in the art, such as, for example, those taught in US – A – 3,737,370 and US – A – 3,854,970. The proportion of epihalohydrin and quaternary amine may vary within a range of from about 0.8 to 3 moles of epihalohydrin to 1 mole of amine, but optimum results are obtained with the use of nearly equimolar portions of the two reagents.

Alternatively, suitable condensates of epihalohydrins and quaternary amines may be bought commercially, such as 3 – chloro – 2 – hydroxypropyl trimethylammonium chloride, sold under the tradename Quab 188 by Degussa Corporation, Teterboro, NJ, or sold under the tradename Dow Quab by Dow Chemical Company, Midland, MI; or 3 – chloro – 2 – hydroxypropyl dimethyl dodecylammonium chloride, sold under the tradename Quab 342, or 3 – chloro – 2 – hydroxypropyl dimethyl octadecylammonium chloride, sold under the tradename Quab 426, both by Degussa Corporation.

The quaternary amine/epihalohydrin condensate reacts with the alkaline solution in a stoichiometric 1:1 ratio. However, a preferable concentration of alkali is one providing a slight excess over the stoichiometric ratio so that the resulting solution of epoxide reaction product and alkali contains sufficient alkali to bring the starch slurry to a pH of 10 – 12, preferably 11 – 12, and to catalyze the reaction of the epoxide with the starch. The alkalis suitable for reaction with the epihalohydrin/amine condensates are alkali metal hydroxides, alkaline earth hydroxides, and quaternary ammonium hydroxides. The preferred alkali is sodium hydroxide, used at a concentration of 15 – 25%, preferably 20%. Within this concentration range, the sodium hydroxide can be mixed at room temperature with the quaternary amine/epihalohydrin condensate without causing excessive heat of reaction, which would hydrolyze the epoxide to the glycol, or without precipitating out the salt; it also provides an excess of alkali to quaternary amine/epihalohydrin condensate over the stoichiometric molar ratio of 1:1 for the reaction to form the epoxide, so that the resulting solution has a final concentration of between 2 – 6.4%. This excess of alkali added to the starch slurry brings and maintains the pH of the slurry to 11 – 12 and catalyzes the reaction of the epoxide with the starch molecules to form the starch derivative. Other concentrations of other alkalis, up to 50%, taking into account the above identified considerations, can be used as are practicable and suitable, and such determinations are within the capabilities of one skilled in the art.

In preparation for the reaction with the quaternary amine/epihalohydrin condensate, the starch is first suspended in water under uniform and moderate agitation to form a slurry having a solids content from about 10 – 45%, preferably between 32 – 40%, and is heated to 35 – 46° C (95 – 115° F). (Other temperatures can be employed; however, care must be taken not to gelatinize the starch.) Suitable starches include unmodified starch, as well as acid modified, dextrinized, hydrolyzed, oxidized, and derivatized starches such as, for example, starch ethers and starch esters that still retain reactive sites. These starches may be derived from any sources including corn, wheat, potato, tapioca, waxy maize, sago, rice, and include the

high amylose starches, and the amylose and amylopectin fractions of starch. The use of the term starch is thus intended to include any amylaceous substance, whether modified or unmodified, which still retains free hydroxyl groups.

The in-line mixers suitable for use in this process are the various types of static mixers, pin-mixers, jet mixers, and pump mixers, which should be designed to provide homogeneous and uniform mixing of the caustic and reagent before the mixture is introduced into the starch slurry.

**Examples**

Example 1 illustrates the procedures for manufacturing quaternary amine cationic starches according to a modification of the method disclosed in US-A-2,813,093, referred to as the standard method, and Example 2, according to the inventive method.

**Example 1 - Control**

This is an example of a batch process for the derivatization of starch using the standard method.

A starch slurry was prepared by mixing 2500 grams (100 parts) of waxy maize starch in 3750 grams (150 parts) of water in an 8 liter capacity laboratory kettle. The starch slurry was heated to 44.6°C (112°F). Then sodium hydroxide in a 3% solution, (15 grams, 0.60 part dry sodium hydroxide) was added over 1 hour, while maintaining the temperature at 44.6°C, until the starch slurry reached a pH of 11.2. A 65% solution of 3-chloro-2-hydroxypropyl trimethylammonium chloride, sold under the tradename Quab 188 by Degussa Corporation, (192.5 grams, 0.66 mole, 7.7 parts) was added over the course of 1 hour with the simultaneous addition of 3% sodium hydroxide (25.5 grams, 0.66 mole, 1.06 parts dry sodium hydroxide), and the reaction was continued for 20 hours at 43.5°C (110°F). The resulting slurry had a pH of 11.2 and a solids content of 31.95%. The final kettle volume was 313.03 parts.

**Example 2**

This is an example of a batch process for the derivatization of starch using the inventive in-line premixing technique for the epihalohydrin/amine condensate and sodium hydroxide.

**Sample 2-a:** A neutral starch slurry was prepared by mixing 2500 grams (100 parts) of waxy maize starch in 3750 grams (150 parts) of water in an 8 liter capacity laboratory kettle. The starch slurry was heated to 44.6°C (112°F). Then, from separate feed lines, Degussa Corporation's Quab 188 (192.5 grams, 0.66 mole, 7.7 parts) and a 21% solution of sodium hydroxide (41.5 grams, 1.66 parts, 1.03 moles dry sodium hydroxide) were simultaneously pumped through an in-line Kenics Mixer (a product of Chemineer Inc.), while maintaining the slurry temperature between 45-46°C (112°-115°F), such that the continuously formed epoxide reaction product was introduced into the starch slurry within about 4-7 seconds after formation. The resultant solution being added to the slurry had a concentration of alkali equivalent to about 3.5%. The total addition time took 1 hour and the reaction was continued for 20 hours at 43.5°C (110°F). The starch slurry had a final pH of 11.4 and a solids content of 37.65%. The final kettle volume was 265.6 parts.

**Sample 2-b:** A neutral starch slurry was prepared by mixing 350 grams (100 parts) of waxy maize starch in 525 grams (150 parts) of water in a 2 liter capacity laboratory kettle. The starch slurry was heated to 43°C (109°F). Then, from separate feed lines, Degussa Quab 342 (28 grams, 0.0332 mole, 8 parts) and a 20% solution of sodium hydroxide (5.25 grams, 1.5 parts, 0.1313 moles dry sodium hydroxide) were simultaneously pumped through an in-line Kenics Mixer while maintaining the slurry temperature between 43-44°C (109-111°F), such that the continuously formed epoxide reaction product was introduced into the starch slurry within about 4-7 seconds after formation. The resultant solution being added to the slurry had a concentration of alkali equivalent to about 6.1%. The total addition time took 45 minutes and the reaction was continued for 22.5 hours at 43-44°C (109-111°F). The starch slurry had a final pH of 11.6 and a solids content of 37.66%. The final kettle volume was 265.5 parts.

**Sample 2-c:** A neutral starch slurry was prepared by mixing 350 grams (100 parts) of waxy maize starch in 525 grams (150 parts) of water in a 2 liter capacity laboratory kettle. The starch slurry was heated to 44°C (110°F). Then, from separate feed lines, Degussa Quab 426 (28 grams, 0.0263 mole, 8 parts) and a 20% solution of sodium hydroxide (5.04 grams, 1.44 parts, 0.1260 moles dry sodium hydroxide) were simultaneously pumped through an in-line Kenics Mixer, while maintaining the slurry temperature between 43-44°C (109-111°F), such that the continuously formed epoxide reaction product was introduced into the starch slurry within about 4-7 seconds after formation. The resultant solution being added to the slurry

had a concentration of alkali equivalent to about 6.2%. The total addition time took 40 minutes and the reaction was continued for 22 hours at 44 °C (110 °F). The starch slurry had a final pH of 11.6 and a solids content of 37.71%. The final kettle volume was 265.2 parts.

A comparison of Examples 1 and 2 shows an increase in tank capacity of 18% using an alkali concentration of 21% for Sample 2-a, an increase in tank capacity of 18% using an alkali concentration of 20% for Sample 2-b, and an increase in tank capacity of 18% using an alkali concentration of 20% for Sample 2-c, in the formation of the epoxide of the quaternary amine/epihalohydrin condensate in the preparation of a cationic quaternary amine starch derivative and a decrease in total production time of about one hour.

Examples 1 and 2 were tested for nitrogen content to compare reaction efficiency. Example 1, prepared by the standard method, had a nitrogen content of 0.30%, indicating a reaction efficiency of 70%, and the samples of Example 2, prepared by the inventive method, had a nitrogen content of 0.30%, indicating a reaction efficiency of 70% for sample 2-a; a nitrogen content of 0.11%, indicating a reaction efficiency of 73% for sample 2-b; and a nitrogen content of 0.10%, indicating a reaction efficiency of 84% for sample 2-c; thus, there was no loss of reaction efficiency using the inventive method.

The starch prepared by the inventive method can be recovered by any of the commercial procedures known and used in the art. One suitable method is to centrifuge the slurry, for example, in a Reineveld centrifuge (a product of Dedert Corporation, IL), and then to flash dry in a suitable dryer, for example, a Barr-Murphy ring dryer (a product of Barr and Murphy, Ltd., London, England). A suitable inlet temperature would be in the range of 400 °F (205 °C), and the outlet temperature, in the range of 180 °F (82 °C).

The starch derivatives formed by this process are suitable additives to cellulose wood pulp in paper making processes as evidenced by comparable drainage and calcium carbonate retention properties for wood pulp containing the cationic starch derivatives formed by the inventive method to the same properties for wood pulp containing cationic starch derivatives formed by the standard method. Examples 3 and 4 illustrate the procedures used for testing drainage and calcium carbonate retention in wood pulp.

**Example 3 - Drainage Test**

This is an example of the procedure used to test for drainage in wood pulp using the starch derivatives prepared in Examples 1 and 2-a.

For purposes of this test, the dry derivative was not recovered. Instead, after addition of the reagents to the starch slurry, by both the standard and inventive method, the starch was slurried at 1.5% solids and jet-cooked at a pH of 4.5 at 104.4 °C (220 °F) in a laboratory-scale steam injection jet cooker at the rate of 100 cc/min to form the cationic starch derivative. This cook was then diluted to 0.1% solids for addition to kraft wood pulp and for analysis of its effect on the drainage properties of wood pulp.

Each of the cationic starches, made by the standard method and by the inventive method, was added at both 05% (4.5 kg starch/907.2 kg of wood pulp) and 1% (9 kg starch/907.2 kg of wood pulp) levels on pulp solids to an unbleached kraft pulp having a pH 8.0, 0.5% consistency, and 500 CSF (Canadian Standard Freeness). This pulp and starch mixture was then added to 1500 ml of tap water contained in a Britt jar equipped with an agitator and modified with an extended mixing cylinder. The base of the modified Britt jar consisted in order from top to bottom of a 200 mesh (76 micron) screen, an 18 mesh (1000 micron) screen, and a stopper. The agitator was set to 250 RPM, and the pulp was mixed for 15 seconds. The stopper was removed from the base and 1200 ml of water were allowed to drain through the wire screen, and the time for drainage in seconds recorded. The drainage rate was calculated in ml/sec by dividing 1200 mls (the volume drained) by the time in seconds for drainage to occur. Two runs were performed for the pulp using the cationic starch made by the standard method (Example 1) and for the pulp using the cationic starch made by the inventive method (Example 2) at both 0.5% and 1% addition levels. The results of the runs were compared in terms of percent performance of the inventive method starch to the standard method starch and are set out in Table 1.

The results show that drainage for the pulp made with starch prepared by the inventive method was 94.0% at 0.5% addition level and 97.4% at 1.0% addition level, compared to the standard method, indicating substantially no loss in drainage properties when starch prepared by the inventive method is used as an additive to wood pulp.

**Example 4 - Retention Test**

This is an example of the procedure used to test for calcium carbonate retention in an alkaline pulp using the starch derivatives prepared in Examples 1 and 2-a.

For purposes of this test, the dry derivative was not recovered. Instead, after addition of the reagents to the starch slurry, by both the standard and inventive method, the starch was slurried at 1.5% solids and jet-cooked at 104.4° C (220° F) in a laboratory-scale steam injection jet cooker at the rate of 100 cc/min. This cook was then diluted to 0.1% solids for addition to kraft wood pulp and for analysis of its effect on calcium carbonate retention of the wood pulp.

Each of the cationic starches was added at 0.5% and 1% levels on pulp solids to bleached 80:20 hardwood/softwood kraft pulp having a pH 8.0, 0.5% consistency, 400 CSF (Canadian Standard Freeness) and containing 30% Albacar HO precipitated calcium carbonate per pulp weight. This pulp and starch mixture consisting of 38.7% total fines, 10.3% fiber fines, and 28.4% calcium carbonate fines was then added to a Britt jar equipped with an agitator and modified with an extended mixing cylinder. The base of the Britt jar consisted in order from top to bottom of a 200 mesh (76 micron) screen, an 18 mesh (1000 micron) screen, and an outlet having a rubber stopper-pinch clamp-hose. The agitator was positioned at 0.3 cm (1/8 inch) above the 200 mesh screen and set to 1000 RPM. The pulp and starch mixture was mixed for 60 seconds, and while agitation was continued, the pinch clamp was released, 5 seconds allowed to pass, and a sample that took exactly 15 seconds to drain was collected. A sample was collected in this manner for each of the pulps at both the 0.5% and 1.0% starch addition levels.

Five ml of 5 N HCl was added to each collected sample to dissolve any unretained calcium carbonate filler. After they were held for 0.5 hour, each sample was filtered and the filtrate tested for unretained calcium carbonate as follows: A 25 ml sample of filtrate was added to a 100 ml beaker situated on a magnetic stirrer. One ml of a buffer solution (16.9 grams ammonium chloride ($NH_4Cl$), 143 ml of concentrated (7.7 M) ammonium hydroxide ($NH_4OH$) and 1.25 grams of the magnesium salt of EDTA, diluted to 250 ml with distilled water) and approximately 0.2 gm of an indicator powder (prepared from 0.5 gram Eriochrome Black T dye blended with 100 gm NaCl) to give a reddish tinge to the solution was added to each sample.

Each sample solution was then titrated with 0.04N EDTA (7.4448 gm of the disodium salt of ethylenediamine tetraacetic acid dihydrate dissolved in 1 liter of distilled water adjusted to pH 10.0 with dilute NaOH) to a clear blue endpoint.

The same titration was run on the raw water used to dilute the pulp, and on the whole pulp containing 30% calcium carbonate. Calcium carbonate retention was measured by the difference in the EDTA titrate needed to reach an endpoint according to the following formula:

$$\%\ CaCO_3\ \text{Retention} = \frac{(P-W) - (S-W)}{(P-W)} \times 100$$

in which P is ml of EDTA for pulp stock, W is ml of EDTA for raw water blank, and S is ml of EDTA for the sample.

The results of the runs were compared in terms of percent calcium carbonate retention in wood pulp containing the inventive method starch to the standard method starch and are set out in Table 1. The results show that calcium carbonate retention for the pulp made with starch prepared by the inventive method was 110.4% at 0.5% addition level and 99.1% at 1.0% addition level compared to the standard method, indicating no loss of calcium carbonate retention properties in wood pulp using starches made by the inventive method.

TABLE 1

| | Example 1 | Example 2-a | % Performance |
|---|---|---|---|
| **Drainage Rate (ml/sec)** | | | |
| **0.5%** | 69.6 | 65.4 | 94.0 |
| **1.0%** | 73.8 | 71.9 | 97.4 |
| **$CaCO_3$ Retention (% retention)** | | | |
| **0.5%** | 21.1 | 23.3 | 110.4 |
| **1.0%** | 21.3 | 21.1 | 99.1 |

Other modifications in the concentrations of alkali will provide different increases in tank capacity, and other time/temperature profiles for the addition of the epoxide into the starch slurry will provide different decreases in time of production, and these modifications are within the capabilities of one skilled in the art.

## Claims

**1.** A process for making dry, non-gelatinized quaternary amine cationic starches comprising the steps of:
(A) providing independently the following:
(a) a solution of alkali having a concentration of 15-50% weight/volume,
(b) a quaternary amine/epihalohydrin condensate,
(c) a starch slurry of 10 - 45% solids content at a temperature of 95° -115° F (35-46° C);
(B) mixing in an in-line mixer the solution of alkali and the quaternary amine/epihalohydrin condensate in a molar ratio of excess alkali to condensate to form the epoxide reaction product and to result in a solution having a concentration equivalent to about 2 - 6.4% alkaline solution;
(C) adding the solution of epoxide reaction product and alkali immediately after formation to the starch slurry while uniformly agitating the starch slurry, maintaining the pH of the starch slurry between about 11 and 12, and maintaining the temperature of the starch slurry at about 95° -115° F (35-46° C).

**2.** The process according to claim 1 in which the epihalohydrin is epichlorohydrin.

**3.** The process according to claim 1 in which the alkali is selected from the group consisting of alkali metal hydroxides, alkaline earth hydroxides, and quaternary ammonium hydroxides.

**4.** The process according to claim 1 in which the alkali is sodium hydroxide in a solution having a concentration of 15 - 25%, and in which the molar ratio of excess alkali to condensate is about 1.6:1.

**5.** The process according to claim 1 in which the starch of the starch slurry is selected from the group consisting of corn starch, potato starch, tapioca starch, waxy maize, and high amylose starch.

**6.** The process according to claim 1 in which quaternary amine/epihalohydrin condensate is selected from the group consisting of 3-chloro-2-hydroxypropyl trimethylammonium chloride, 3-chloro-2-hydroxypropyl dimethyl dodecylammonium chloride, and 3-chloro-2-hydroxypropyl dimethyl octadecylammonium chloride.

**7.** The process according to claim 1 in which the in-line mixer is a static mixer.

European Patent Office

# EUROPEAN SEARCH REPORT

Application Number

EP 92 11 9298

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y,D | US-A-2 813 093 (C.G. CALDWELL ET AL.)<br>the whole document, especially:<br>* column 2, line 44 - column 4, line 5 *<br>* example 5 *<br>--- | 1-7 | C08B31/12 |
| Y,D | US-A-4 281 109 (W. JAROWENKO ET AL.)<br>* column 2, line 9 - line 26 *<br>* column 3, line 18 - column 4, line 22 *<br>* example 1 *<br>* claim 5 *<br>----- | 1-7 | |

TECHNICAL FIELDS SEARCHED (Int. Cl.5 )

C08B
C08L

The present search report has been drawn up for all claims

| Place of search | Date of completion of the search | Examiner |
|---|---|---|
| THE HAGUE | 18 FEBRUARY 1993 | BETTELS B.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document